# EUROPEAN PATENT APPLICATION

(11) **EP 2 731 057 A1**
(43) Date of publication of application: **14.05.2014**
(21) Application number: 12191716.5
(22) Date of filing: 08.11.2012
(51) Int. Cl.: G06K 19/06

(54) **Image with visible information coded therein**

(71) Applicant: Ahrweiler, Michael, 47877 Willich (DE)
(72) Inventor: Ahrweiler, Michael, 47877 Willich (DE)
(74) Representative: Wittmann, Günther

(57) **Abstract**

The invention discloses a method for coding information into an image, comprising the following steps:
- processing at least a part of an image into a processed image such that a human observer can recognize the original image and that the processed image differs form the original image; and
- coding the image by coding information into at least a part of the image such that the original image can be recognized by a human observer and such that the information can be determined by a step of acquiring and decoding the coded processed image.

The coded information is machine readable.

## Description

The present invention relates to visibly coding machine-readable information into an image.

It is known to position a so called QR code next to written or pictorial information. The QR code may be scanned by a mobile terminal, wherein the information coded in the QR code is passed as a uniform resource locator or the like to a browser in order to refer to more information related to the written information and pictorial information. However, the QR code needs additional space beside the written information and the pictorial information. Thus, the QR code reduces the space available for written information and pictorial information.

It is an object of the present invention to provide a method to code information more efficiently within a given space.

The object of the invention is solved by a method of coding information into an image comprising the step of processing at least a part of an image into a processed image such that a human observer can recognize the original image and that the processed image differs from the original image. The method further comprises the step of coding the image by coding information into at least a part of the image such that the original image can be recognized by a human observer and such that the information can be determined by the step of acquiring and decoding the coded processed image. The image may be a logo, a photo or the like. The human observer can recognize the logo, such as a logo of an organization or company, or the photo, such as a photo of a person, and thereby recognize that the image comprises coded information. The human observer may scan the coded image by a mobile terminal in order to be referred to more information. The information is coded machine-readable into the image. The expression "image" is not necessarily related to pictorial information. The image may also comprise text information, such as a letter or a combination of letters.

The present invention provides the advantage that space may be saved, since information is coded into an existing space, such as a space reserved for a publication and printed media or the like. Further, the elimination of the separate code, such as the QR code creates a more consistent appearance and the reader of the publication is not distracted by the QR code.

The step of processing the image may include combining at least a part of the image with a pattern into a processed image such that a human observer can recognize the image and that the processed image differs from the original image. The pattern may be a hole pattern, through which the original image is still visible. The pattern may be used in a plurality of different applications originating from different sources in order to enable the human observer to recognize that the image comprises machine-readable information.

The step of processing at least a part of an image into a processed image such that a human observer can recognize the image and such that the processed image differs from the original image, and the step of coding at least a part of the image by coding information into the image such that the original image can be recognized by the human observer and such that the information can be determined by acquiring and processing the coded processed image are performed such that the step of processing at least a part of the image is performed such that also information is coded into the image to generate the coded processed image. In this case information is coded into the image simultaneously with the step of changing the image from the original image to the processed image.

The step of processing at least a part of an image into a processed image such that a human observer can recognize the image and that the processed image differs from the original image, and the step of coding at least a part of the image by coding information into the image such that the original image can be recognized by the human observer and such that the information can be determined by acquiring and processing the coded processed image are performed such that at least one pixel of the pattern is changed depending on the information. The pattern may be changed depending on the information to be coded into the image and thereafter the pattern may be overlaid or combined with the image, for example.

The step of combining the image with a pattern into a combined image may include overlaying an regular pattern over the image, overlaying an irregular pattern over the image, overlaying a random pattern over the image, overlaying a pseudo random pattern over the image, and coding the pattern with symbols and overlaying the pattern over the image, substituting at least one symbol in the pattern by another symbol and overlaying the pattern over the image, changing at least one symbol in the pattern and overlaying the pattern over the image, overlaying a noise pattern over the image, encoding a pattern with information and overlaying the encoded pattern on the image, coding position information into the image indicating, which part of the image is coded with information, and/or storing information indicating which part of the image is coded with information in a data base. It is to be understood that the expression overlaying the pattern over the image also comprises overlaying the pattern over a part of the image. The pattern may be encoded with symbols depending on the information. At least one symbol of the pattern may be substituted depending on the information.

The step of coding at least a part of the image by coding information into the image such that the information may be determined by acquiring and decoding includes changing a value of at least one pixel of the image, changing a value of at least one pixel in the pattern, coding a uniform resource locator into the image, coding a uniform resource locator into the pattern, coding meta information into the image, coding meta information into the pattern, coding binary information into the image, coding binary information into the pattern, and/or coding symbols into the image. The value of at least one pixel of the image and/or the value of at least one pixel of the pattern may be changed depending on the information. It is to be understood, that a plurality of pixels may be changed in the image and/or in the pattern in order to eliminate optical distortions and the like.

The method may further comprise the step of storing the original image in a data base. The data base may be a central data base. All terminals, such as mobile terminals, scanning the processed image may access the original image stored in a data base, which may be a remote and/or central data base. Based on the differences between the original image and the coded processed image the terminal may restore the information coded into the image.

Alternatively, the terminal may transmit the scanned coded processed image to a device connected to the database storing the original image and the device may return the information coded into the image to the terminal.

The step of acquiring the image includes the step of projecting the processed coded image by optics on a sensor. The image may be projected by a camera of a mobile device, by a scanning unit connected to a computer and the like. The mobile device may be a cellular phone, smartphone, personal digital assistant and the like.

The invention also discloses a method for decoding information from a processed coded image comprising the steps of acquiring the coded processed image and decoding the image by detecting information coded into the pattern, detecting information coded into the changed processed image and/or comparing the acquired image with an image stored in a database.

Information indicating, which part of the processed coded image is coded with information, may be decoded from the image. Information is retrieved from a database indicating, which part of the processed coded image is coded with information. Accordingly, the decoding unit can determine the location of the image, in which the information to be decoded may be found. The decoding unit may be implemented in a mobile device or in a device linked to the database.

The present invention also discloses a computer program product adapted to execute the steps according to the above method for coding information into an image, when loaded into a memory and executed in a computer processor. The computer program product may also be adapted to execute the method for decoding information from a processed coded image when loaded into a memory and executed in a computer processor. The computer processor may be a processor of a mobile device, such as a mobile phone, cellular phone, smartphone, PDA, or of a non-mobile computer.

The invention also discloses an apparatus adapted to encode or decode information into and from, respectively, an image, and comprising a processor and a memory arranged to execute the steps of the above methods, wherein the above computer program product is loaded into the memory of the processor.

The invention is now described in more detail under reference to the accompanying drawings showing non-limiting embodiments of the invention, wherein
Figure 1 shows a letter that is combined with a pattern;
Figure 2 shows a letter which is aligned with the pattern;
Figure 3 shows a letter combined with a pattern, wherein information is coded into the image;
Figure 4 shows a letter and an overlying pattern, wherein information is coded into the pattern;
Figure 5 shows a first logo combined with a pattern;
Figure 6 shows the first logo combined with a pattern in which information is coded;
Figure 7 shows a second logo combined with a pattern without information coded therein;
Figure 8 shows the second logo combined with the pattern, wherein information is coded into the pattern;
Figure 9 shows a further example of a coded image;
Figure 10 shows a first IT infrastructure for decoding the coded image; and
Figure 11 shows a second IT infrastructure for coding and decoding images.

In the figures images combined with a pattern and coded into the image are shown. However, neither the pattern nor the code coded into the image are drawn to scale. For purposes of illustration the figures are shown in black and white. It is to be understood that the figures may also comprise colors. Particularly, the original image may comprise colors and/or grey tones.

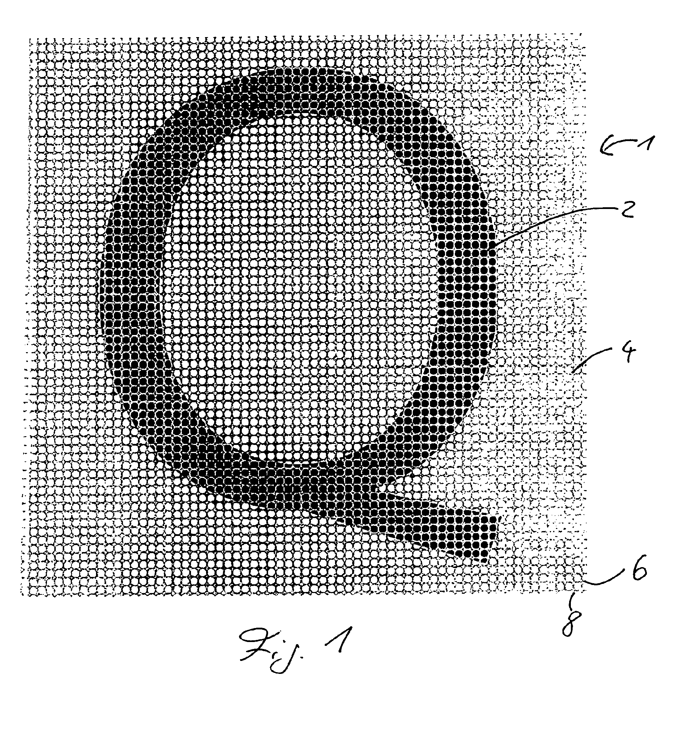

Figure 1 shows an image one comprising the Latin letter Q on which a grid 4 for is placed. The grid 4 comprises lines 6 and rows 8. At the section of the lines 6 and rows 8 a rounded portion is placed. In image 1 the border area is determined only by the outline of the Latin letter Q.

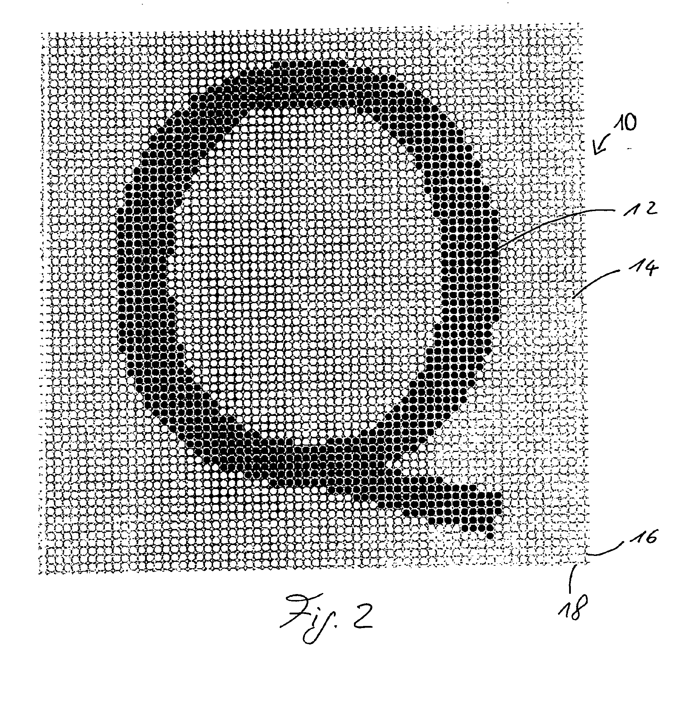

Figure 2 shows an image 10 comprising also the Latin letter 12 on which a pattern 14 comprising the grid of lines 16 and rows 18 is placed. The border area of the Latin letter Q is determined by the outline of the letter Q and the grid pattern such that the border area is either black or white. This has the advantage that an algorithm detecting information in the image can more precisely determine whether a pixel is related to the background or foreground and which pixel comprises coded information.

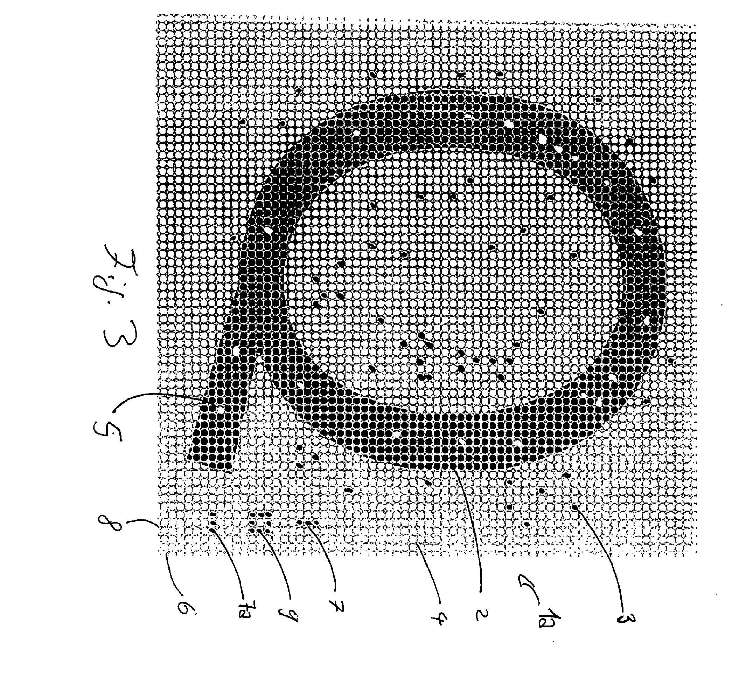

Figure 3 is based on figure 1 and shows the Latin letter Q 2 on which a grid 4 having a grid of lines 6 and rows 8 is placed. Further to figure 1, information is coded into the image 1a. Generally speaking, the image 1a comprises a black foreground 2 and a white background. In the background information is coded by changing the value of a pixel region, such as from white to black. Also in the foreground 2 the value of pixel in a predetermined portion 5 may be changed. Particularly, the pixel values in the predetermined portion 5 may be changed from black to white.

Accordingly, a human observer can recognize in the image 1a the original image information 2, such as the letter Q, which may be a logo of an organization. Further, the human observer may recognize that information is coded into the image, since a grid 4 is placed over the image and/or portions 3, 5 comprising amended pixel values are placed in the image. Therefore, the user can recognize the original image and that information is coded into the image. The user may scan the image 1a in order to read the coded information 3, 5 out of the image 1a. The coded information 3, 5 may comprise a uniform resource locator, which may be passed to a browser. The browser may display the information associated with the uniform resource locator.

It is to be understood that also a machine-readable symbol such as a vertical line 7, a horizontal line 7a and a square 9 or any regular or irregular geometrical shape may be coded into the image 1a.

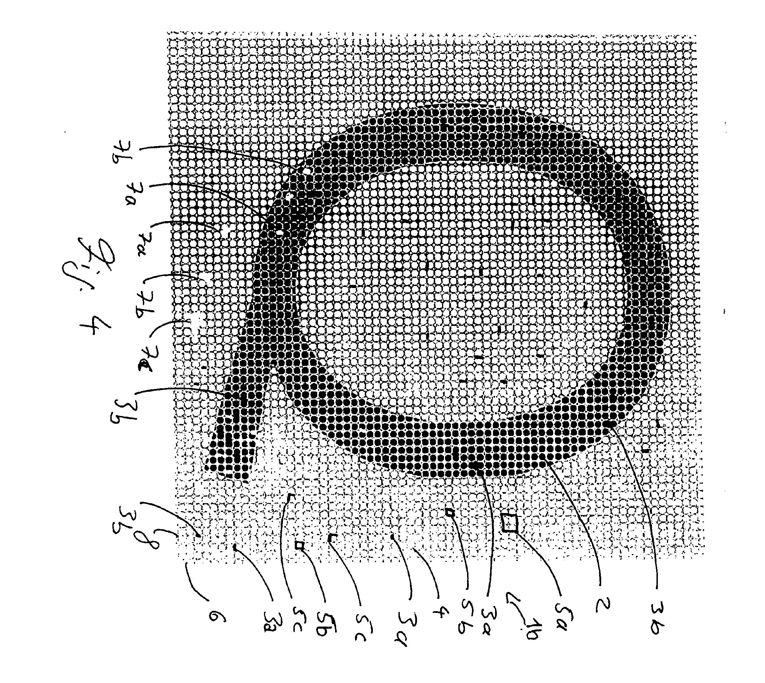

With reference to figure 4 a further coded image 1b is shown comprising a Latin letter 2 and an overlaid grid 4 comprising rows 6 and columns 8. Generally, the foreground 2 comprises a first color, such as black, the background comprises a second color, such as white, and the pattern 4 comprises a third color, such as grey.

In the case of figure 4 information is coded into the pattern 4 placed over the original image 2. In order to code information into the image 1b vertical elements 3b of the grid 4 are changed from the third color to the first color, irrespectively whether they are placed next to the foreground or background. Further, horizontal elements of the pattern 3a may be changed into the first color irrespectively whether they are placed in the foreground or background. In figure 4, symbols 5a, 5b, 5c may be coded into the image 1b. The symbols may be coded such, that parts of the grid 4 are changed into the first color. Further, a vertical part of the grid 4 may be changed into the second color 7a. Also a horizontal part of the pattern 4 may be changed into the first color as is shown with reference to reference numeral 7b. Further, symbols may be implemented by changing the pixel values of the pattern 4 into the first color, as is exemplary indicated by reference numeral 7c.

Also the code shown in figure 4 is machine-readable and may relate to a uniform resource locator to which more information is assigned.

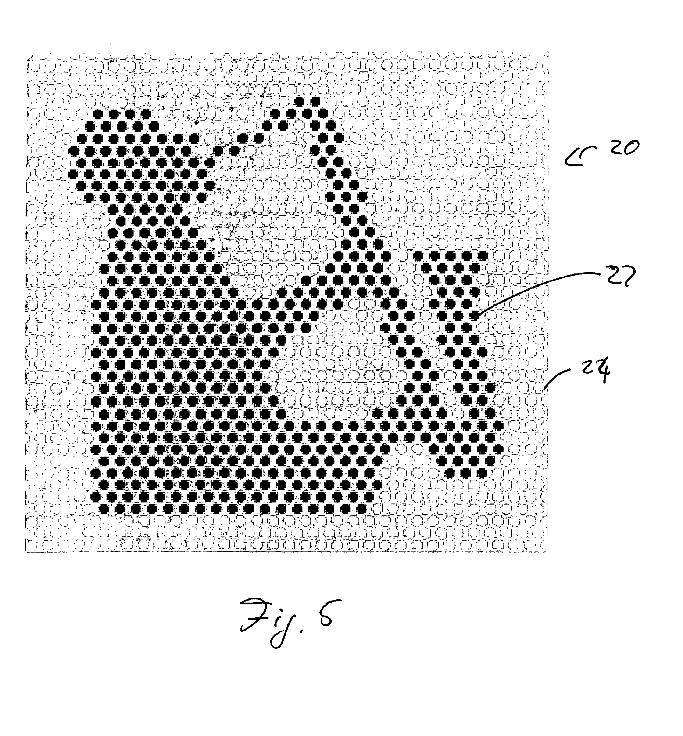

Figure 5 shows a further image 20, on which a pattern 24 is placed over the original image 22.

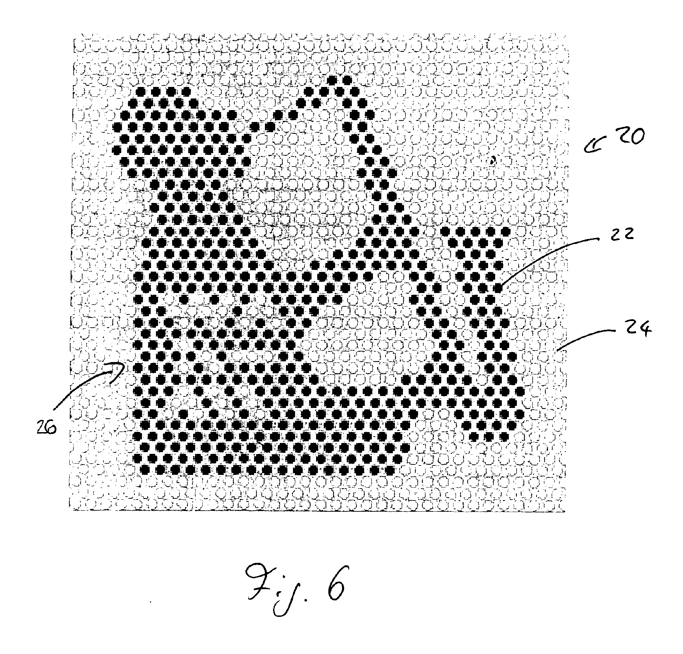

Figure 6 shows the image 20 comprising the original image 22 and the pattern having information 26 coded into the image, which is machine-readable. As in the preceding images, a human observer can recognize the original image 22 and that information 26 is coded into the image. The information 26 is machine-readable.

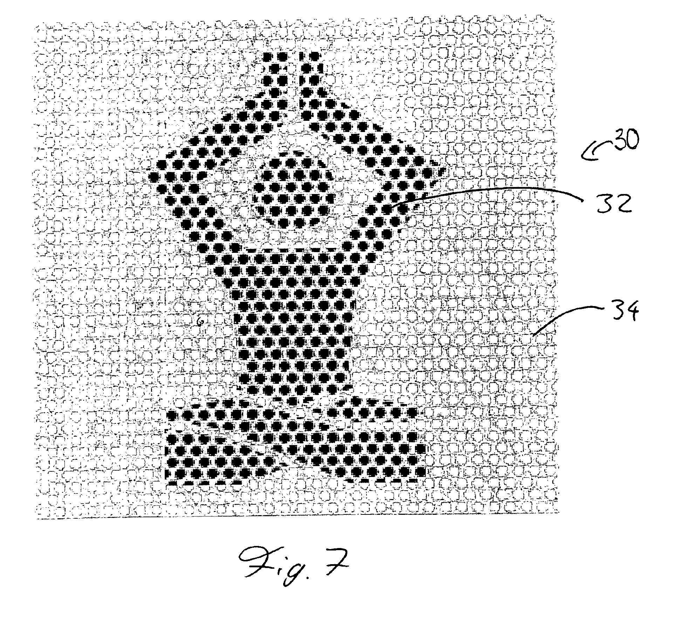

Figure 7 shows an image 30 comprising a second logo 32 which is combined with a pattern 34.

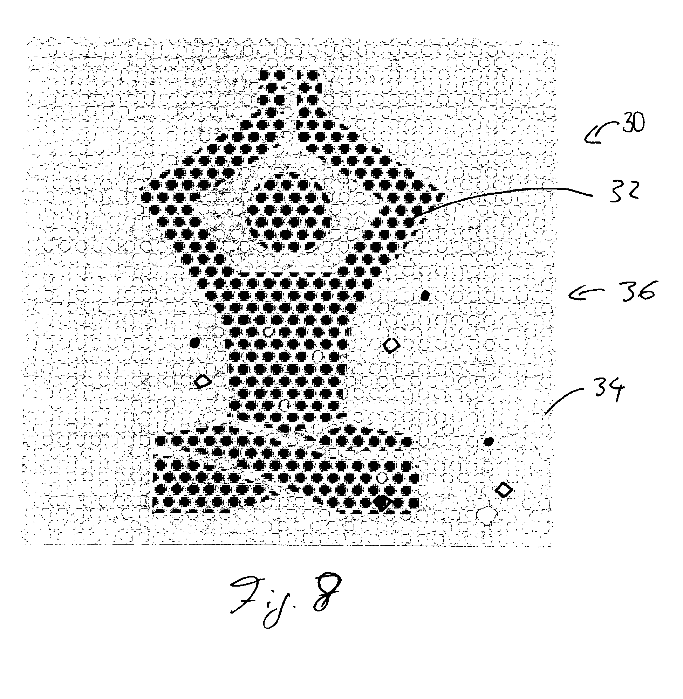

Figure 8 shows that information 36 is coded into the image and pattern, respectively. The information may be coded by changing the values of pixels associated to the foreground 32 of the original image and/or the background of the original image. Techniques for changing pixel values in the foreground and/or the background have been described before with reference to figures 3 and 4 in more detail.

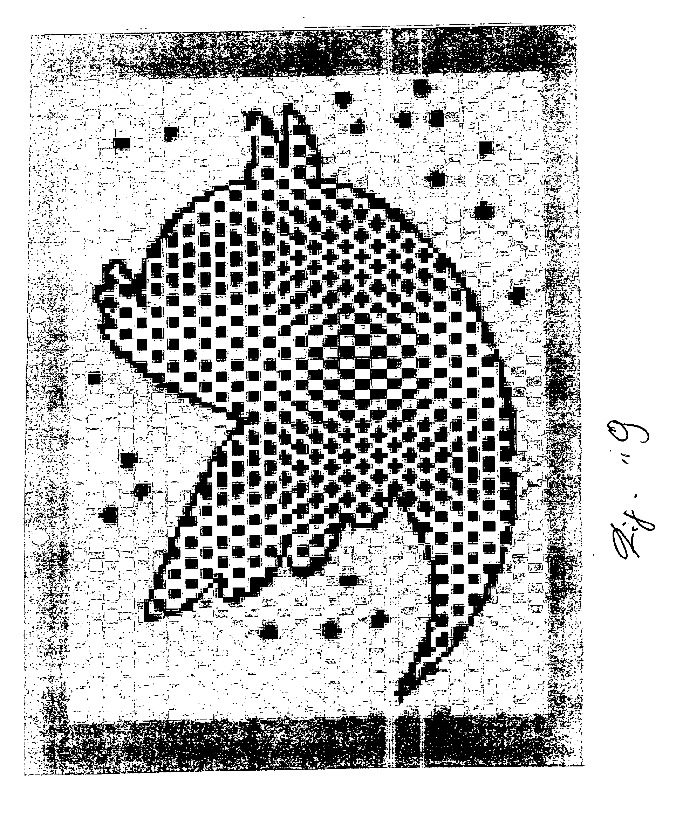

Reference is now made to figure 9 showing a foreground constituting a logo and a background. Both the foreground and the background are coded by a plurality of different symbols, wherein the plurality of different symbols constitutes a coded information, which is machine-readable and may be decoded by a computer or the like, on which is running a computer program product, which is capable of decoding the information coded machine readable into the image.

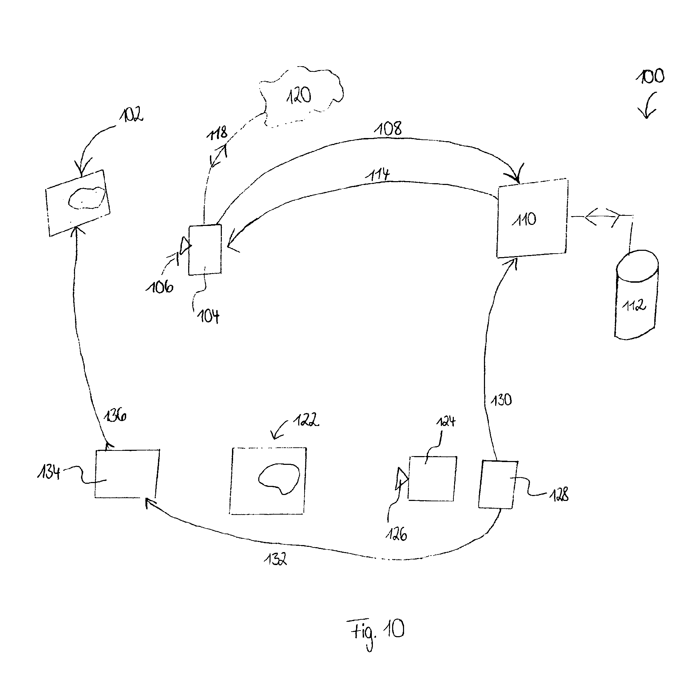

Reference is now made to figure 10, which shows an exemplary application of the present invention. Reference numeral 102 shows an image, in which information is coded. A mobile terminal 104 comprising imaging means 106 is employed by a user to scan the coded image 102. In a first embodiment the coded image 102 is sent by a command 108 to an evaluation unit 110. The evaluation unit 110 retrieves the original image from a database 112. The evaluation unit 110 compares the original image with the image transmitted from the mobile terminal 104 and returns information coded into the image 102 taken by the mobile terminal 104, such as a uniform resource locator. The uniform resource locator may be passed to a browser which retrieves data by a further command 118 from a cloud 120. A cloud 120 may be a computer and/or storage means that is accessible via a network connection.

Figure 10 also shows an original uncoded image 122 which is scanned by an optical means 126 coupled to an acquisition means. A transmission unit 128 transmits 130 the original image to the evaluation unit 110 which stores the original image into the database 112 for later retrieval by a mobile unit 104. However, the IT infrastructure according to figure 10 may also be used by a second operation scheme. The mobile unit 104 may image by the imaging unit 106 a coded image 102. The coded image is transmitted by a command 108 to the evaluation unit 110. The evaluation unit 110 retrieves the original image from a database 112 and returns the original image by a return command 114 to the mobile unit 104. The mobile unit then evaluates the acquired image 102 and the original image 122 in order to extract information from the coded image 102. The coded information may be passed to a browser which retrieves more information from a cloud 120 using a further communication 118.

It is to be understood that the image 122 does not have to be scanned or imaged by an imaging unit 126. The original image 122 may be directly converted into a coded image 102, such as is described in the above general description.

The original image 122 may be transmitted by command 132 to a processing unit 134 which combines the image with information to be coded into the image and generates a scanable image 136.

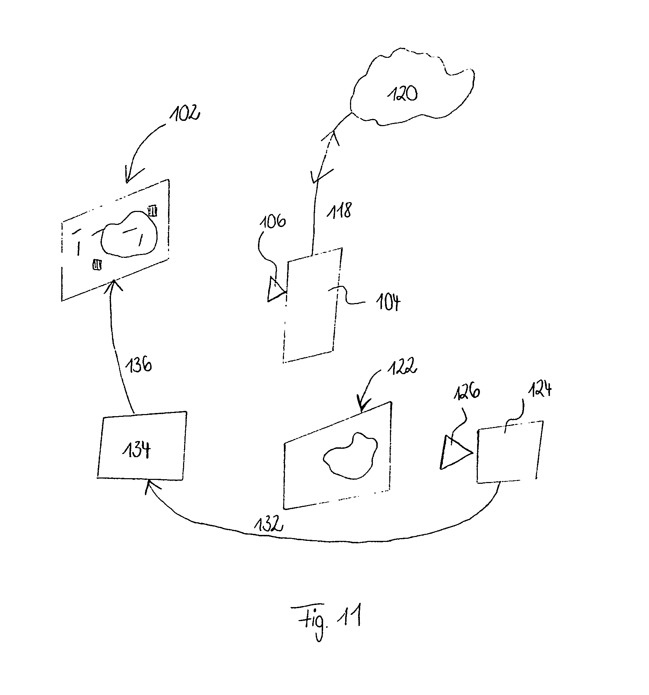

A further IT infrastructure is described with respect to figure 11. A mobile terminal 104 may scan a coded image 102 using and imaging means 106. The mobile terminal 104 may decode the information from the original image 122. The mobile terminal may extract a uniform resource locator and transmit the same by a command 118 to a cloud 120, for example, in order to retrieve more information related to the image 102 from the cloud 120. The coded image 102 may comprise a redundant code, by which pixel values of the image, the image foreground, the image background and/or the optional pattern overlaid over the image are changed in order to retrieve information from the image. In this embodiment of the IT system no central storage for original images 122 is necessary.

Further, figure 11 shows a system for coding information into the original image 122 which is displayed as a changed coded image 102. The coding system comprises a coding unit 124 comprising an imaging means 126. It is to be understood that the imaging unit 126 is not necessary and that the original image 122 may be imported directly by means of digital data-processing into a suitable computer. The original image 122 may be transmitted by a command 132 into a coding unit 134 which is adapted to code information, such as an uniform resource locator, into the image. The coded image may be transmitted by command 136 to a printing machine which prints the coded image 102 to be scanned by a mobile unit 104, as described before.

The present invention provides the advantage that the original image information, such as a logo of an organization may be recognized by a human observer. Further, the human observer may recognize that machine-readable information is coded into the image. The machine- readable information may be scanned by a mobile device, such as a smartphone or the like. The information coded into the image may comprise a uniform resource locator that may be passed to a browser in order to retrieve more information that may be associated with the image and particularly to the information coded therein.

The present invention reduces space required for a publication in order to present information about the publishing organization, for example, and information associated to the publication and to the publishing organization.

The present invention provides the advantage that whenever an image, especially a logo, is part of a publication the method described above allows to code additional information directly into any of these images in the ways described above and thus without distracting or guiding away the observer's view or attention from the actual content of the publication or advertisement.

## Claims

1. Method for coding information into an image, comprising the following steps:
- processing at least a part of an image into a processed image such that a human observer can recognize the original image and that the processed image differs form the original image; and
- coding the image by coding information into at least a part of the image such that the original image can be recognized by a human observer and such that the information can be determined by a step of acquiring and decoding the coded processed image.

2. Method according to claim 1, wherein the step of processing the image includes combining at least a part of the image with a pattern into a processed image such that a human observer can recognize the image and that the processed image differs from the original image.

3. Method according to claim 1 or 2, wherein the step of processing at least a part of an image into a processed image such that a human observer can recognize the image and that the processed image differs from the original image, and the step of coding at least a part of the image by coding information into the image such that the original image can be recognized by the human observer and such that the information can be determined by acquiring and processing the coded processed image are performed such that
- the step of processing at least a part of the image is performed such that also information is coded into the image to generate the coded processed image.

4. Method according to claim 2, wherein the step of processing at least a part of an image into a processed image such that a human observer can recognize the image and that the processed image differs from the original image, and the step of coding at least a part of the image by coding information into the image such that the original image can be recognized by the human observer and such that the information can be determined by acquiring and processing the coded processed image are performed such that
- at least one pixel of the pattern is changed depending on the information.

5. Method according to any one of claim 2, 3 or 4, wherein the step of combining the image with a pattern into a combined image may include at least one of the following steps:
- overlaying a regular pattern over the image;
- overlaying an irregular pattern over the image;
- overlaying a random pattern over the image;
- overlaying a pseudo random pattern over the image;
- encoding the pattern with symbols and overlaying the pattern over the image;
- substituting at least one symbol in the pattern by another symbol and overlaying the pattern over the image;
- changing at least one symbol in the pattern and overlaying the pattern over the image;
- overlaying a noise pattern over the image;
- coding a uniform resource locator into the pattern;
- coding meta information into the pattern;
- coding binary information into the pattern;
- encoding a pattern with information and overlaying the encoded pattern on the image;
- coding position information into the image indicating, which part of the image is coded with information; and
- storing information indicating which part of the image in coded with information in a database.

6. Method according to any one of claims 1 to 5, wherein the step of coding at least a part of the image by coding information into the image such that the information may be determined by acquiring and decoding includes at least one of the following steps:
- changing a value of at least one pixel of the image;
- changing a value of at least one pixel of the pattern;
- coding an uniform resource locator into the image;
- coding meta information into the image;
- coding binary information into the image;
- coding symbols into the image;

7. Method according to any one of the preceding claims further comprising the step of
- storing the original image in a data base.

8. Method according to any one of claims 1 to 7, wherein the step of acquiring the image includes the step of projecting the processed coded image by optics on a sensor.

9. Method for decoding information from a processed coded image according to any one of claims 1 to 8, comprising the following steps:
- acquiring the coded processed image; and
- decoding the image by at least one of the following steps:
- detecting information coded into the pattern;
- detecting information coded into the changed processed image; and/or
- comparing the acquired image with an image stored in a data base.

10. Method for decoding information from a processed coded image, wherein the coded image has been generated by a method according to any one of claims 1 to 9, said method for decoding comprising the following steps:
- acquiring the coded amended image; and
- decoding the image by at least one of the following steps:
- detecting information coded into the pattern;
- detecting information coded into the changed image; and/or
- comparing the acquired image with an image stored in a data base.

11. Method according to claim 10, wherein the step of acquiring the image includes the step of projecting the processed coded image by optics on a sensor.

12. Method according to one of claims 8 to 11 further comprising one of the following the steps:
- decoding from the image information indicating which part of the processed encoded image is coded with information;
- retrieving information from a database indicating which part of the processed encoded image is coded with information.

13. Computer program product adapted to execute the steps according to any one of claims 1 to 9 and/or adapted to execute the steps according to any one of claims 10 to 12 when loaded into a memory and executed in a computer processor.

14. Apparatus adapted to encode or decode information into and from, respectively, an image, and that comprises a processor and memory arranged to execute the steps according to any one of claims 1 to 9 and/or adapted to execute the steps according to any one of claims 10 to 12, **characterized in that** the computer program product according to claim 13 is loaded in the memory of the processor.
